# EUROPÄISCHE PATENTSCHRIFT

(11) **EP 2 180 121 B1**
(45) Veröffentlichungstag und Bekanntmachung des Hinweises auf die Patenterteilung: **10.04.2013**
(21) Anmeldenummer: 09012362.1
(22) Anmeldetag: 30.09.2009
(51) Int. Cl.: E05B 65/19, E05C 17/54, E05B 15/02, E05F 15/14, B60J 7/20

(54) **Vorrichtung zur Festlegung der Lage einer Klappe**
Device for fixing the position of a bonnet
Dispositif de fixation d'un capot en position

(30) Priorität: 25.10.2008 DE 102008053218
(43) Veröffentlichungstag der Anmeldung: 28.04.2010
(73) Patentinhaber: Audi AG, 85045 Ingolstadt (DE)
(72) Erfinder: Lowak, Heiko, 74722 Waldhausen (DE)

(56) Entgegenhaltungen:
- EP-A2- 0 865 949
- DE-A1-102004 048 405
- DE-A1-102006 009 486
- DE-U1-202004 005 176
- US-A- 5 033 789
- US-E- R E17 083

## Beschreibung

Die Erfindung betrifft eine Vorrichtung zur Festlegung der Lage einer zwischen einer Offenstellung und einer Geschlossenstellung beweglichen Klappe eines Kraftfahrzeugs in der Geschlossenstellung nach der im Oberbegriff von Anspruch 1 näher definierten Art.

Aus dem allgemeinen Stand der Technik sind derartige Vorrichtungen bekannt, welche dazu dienen, die Lage der beweglichen Klappe des Kraftfahrzeugs, insbesondere eines Verdeckkastendeckels, in einer Richtung, beispielsweise der y-Richtung, also der Fahrzeugquerrichtung, festzulegen. Um eine exakte Führung der Klappe zu gewährleisten, wenn dieselbe in ihre Geschlossenstellung gebracht wird, ist es erforderlich, das an der Klappe angebrachte Bauteil gegenüber dem mit der Karosserie verbundenen Bauteil möglichst genau einzustellen, (siehe z.B. Dokument EP-A-0 865 949).

Zur Einstellung des mit der Klappe verbundenen Bauteils ist es erforderlich, dasselbe an seinen Befestigungspunkten zu lösen. Anschließend muss der Monteur das Bauteil auf der Klappe verschieben, dasselbe wieder befestigen und durch Schließen der Klappe die relative Position des an der Klappe angebrachten Bauteils gegenüber dem karosseriefesten Bauteil prüfen. Da bei jedem Lösen der Befestigungspunkte die vorherige Einstellung verloren geht, ist es meist erforderlich, die Einstellung, also das Lösen und anschließende Befestigen des Bauteils, mehrfach zu wiederholen, was zu sehr hohen Montagezeiten und damit zu entsprechenden Kosten führt.

Es ist daher Aufgabe der vorliegenden Erfindung, eine Vorrichtung zur Festlegung der Lage einer zwischen einer Offenstellung und einer Geschlossenstellung beweglichen Klappe eines Kraftfahrzeugs in der Geschlossenstellung zu schaffen, welche eine einfache Einstellung des an der Klappe angebrachten Bauteils gegenüber dem an der Karosserie angebrachten Bauteils ermöglicht.

Erfindungsgemäß wird diese Aufgabe durch die in Anspruch 1 genannten Merkmale gelöst.

Durch den erfindungsgemäßen, an der Grundplatte drehbar gelagerten Exzenter ist es auf sehr einfache Weise möglich, die Grundplatte gegenüber der Klappe oder der Karosserie auf kontrollierbare Art und Weise zu verschieben, da es zum Verstellen der Grundplatte mittels des Exzenters ausreicht, die Verbindung zwischen der Grundplatte und der Klappe bzw. der Karosserie nur sehr leicht zu lösen. Durch Verdrehen des Exzenters um einen gewissen Betrag können dabei sehr feine Einstellungen vorgenommen werden. Die beiden an der Grundplatte angebrachten Anschlagelemente erzeugen dabei die Verschiebung der Grundplatte, wenn der Exzenter verdreht wird.

Erfindungsgemäß kann also eines der beiden Bauteile der erfindungsgemäßen Vorrichtung zur Festlegung der Lage der Klappe auf einfache Weise verstellt werden, um die Klappe in ihrer korrekten Lage in der Geschlossenstellung festzulegen.

Eine sehr einfache Aribringung des Exzenters und somit auch der Grundplatte an der Klappe bzw. der Karosserie, ergibt sich, wenn in einer vorteilhaften Weiterbildung der Erfindung der Exzenter mittels einer Schraube mit der Klappe oder der Karosserie verbunden ist.

Hierbei kann eine besonders einfache Verschiebung der Grundplatte ermöglicht werden, wenn die Schraube in einem Langloch in der Grundplatte geführt ist.

Um dem Monteur eine einfachere Verstellung des Exzenters zu ermöglichen, kann in einer weiteren, sehr vorteilhaften Ausgestaltung der Erfindung vorgesehen sein, dass der Exzenter eine Skala aufweist, welche die relative Position des Exzenters zu der Grundplatte anzeigt.

Wenn des weiteren vorgesehen ist, dass das mit der Karosserie verbundene Bauteil und/oder das mit der Klappe verbundene Bauteil eine Schrägfläche aufweist, so kann die Klappe in einfacherer Weise in ihre Geschlossenstellung gebracht werden, da auf diese Weise eine bessere Führung derselben gegeben ist.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: eine sehr schematische Darstellung der erfindungsgemäßen Vorrichtung;
- Fig. 2: das an der Klappe angebrachte Bauteil der erfindungsgemäßen Vorrichtung in einer ersten Ansicht;
- Fig. 3: das Bauteil aus Fig. 2 in einer zweiten Ansicht;
- Fig. 4: das Bauteil aus Fig. 2 in einer dritten Ansicht;
- Fig. 5: das Bauteil aus Fig. 2 in einer vierten Ansicht; und
- Fig. 6: das Bauteil aus Fig. 2 in einer fünften Ansicht.

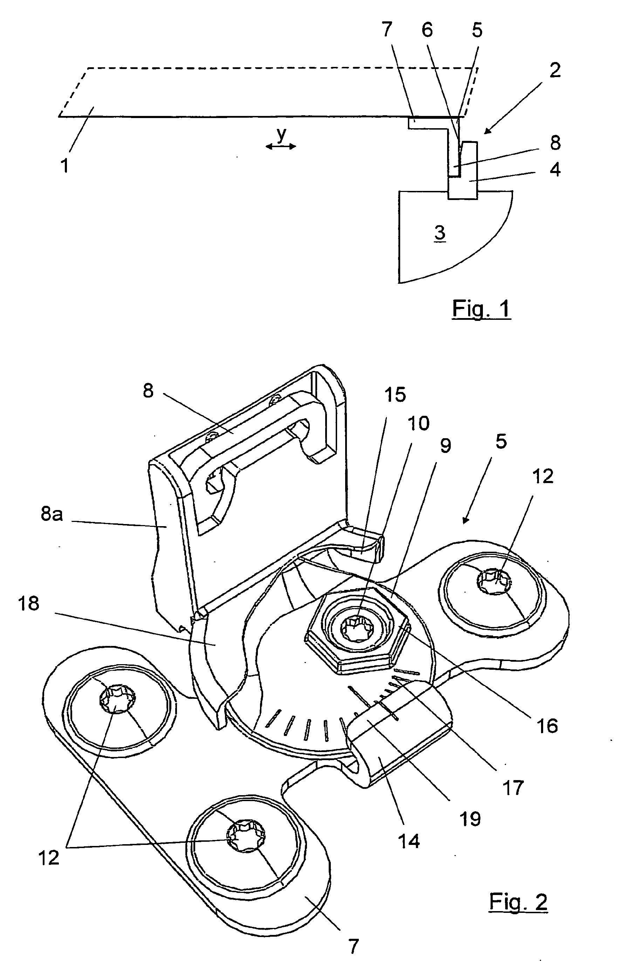

Fig. 1 zeigt auf sehr schematische Art und Weise eine zwischen einer mittels einer gestrichelten Linie dargestellten Offenstellung und einer durch die durchgezogene Linie dargestellten Geschlossenstellung bewegliche Klappe 1 eines in seiner Gesamtheit nicht dargestellten Kraftfahrzeugs. Bei der Klappe 1 handelt es sich im vorliegenden Fall um einen sogenannten Verdeckkastendeckel, also um eine Klappe 1, die einen Verdeckkasten, in dem ein Verdeck des Kraftfahrzeugs in seinem geöffneten Zustand untergebracht ist, nach oben abschließt. Da die Klappe 1 auch während einer Geschwindigkeit des Kraftfahrzeugs von bis zu 50 km/h geöffnet und insbesondere geschlossen werden kann, ist eine Vorrichtung 2 notwendig, die die Lage der Klappe 1 in der Geschlossenstellung festlegt.

Im vorliegenden Fall weist die Vorrichtung 2 ein an einer nur sehr schematisch angedeuteten Karosserie 3 des Kraftfahrzeugs angebrachtes Bauteil 4 und ein an der Klappe 1 angebrachtes Bauteil 5 auf, welches beim Einnehmen der Geschlossenstellung von dem an der Karosserie 3 angebrachten Bauteil 4 zumindest in einer Richtung geführt ist. Im vorliegenden Fall ist das Bauteil 5 in der mit "Y" bezeichneten Fahrzeugquerrichtung durch das Bauteil 4 geführt. Um auch bei größeren Abweichungen von der korrekten Position sicherzustellen, dass die Klappe 1 in ihre Geschlossenstellung gelangt, weist das Bauteil 4 an seiner dem Bauteil 5 zugewandten Seite eine Schrägfläche 6 auf. Das Bauteil 5 weist eine Grundplatte 7 zur Verbindung des Bauteils 5 mit der Klappe 1 und ein mit der Grundplatte 7 verbundenes Leit- bzw. Einführelement 8 auf, das beim Schließen der Klappe 1 mit dem Bauteil 4 in Kontakt kommt und dadurch die Klappe 1 in die korrekt Position lenkt. Im vorliegenden Fall ist das Einführelement 8 mit einer vorzugsweise aus Kunststoff bestehenden Kappe 8a versehen, um Verschleiß zu vermeiden.

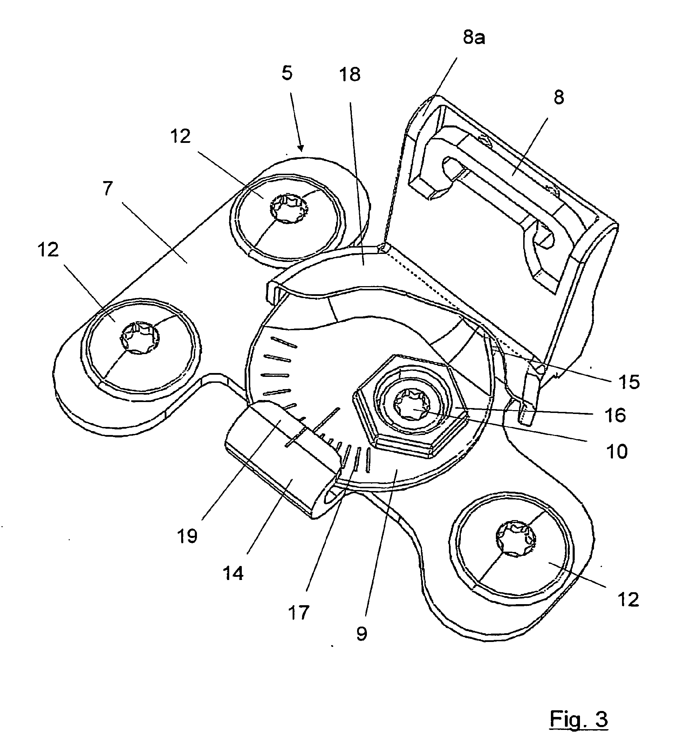

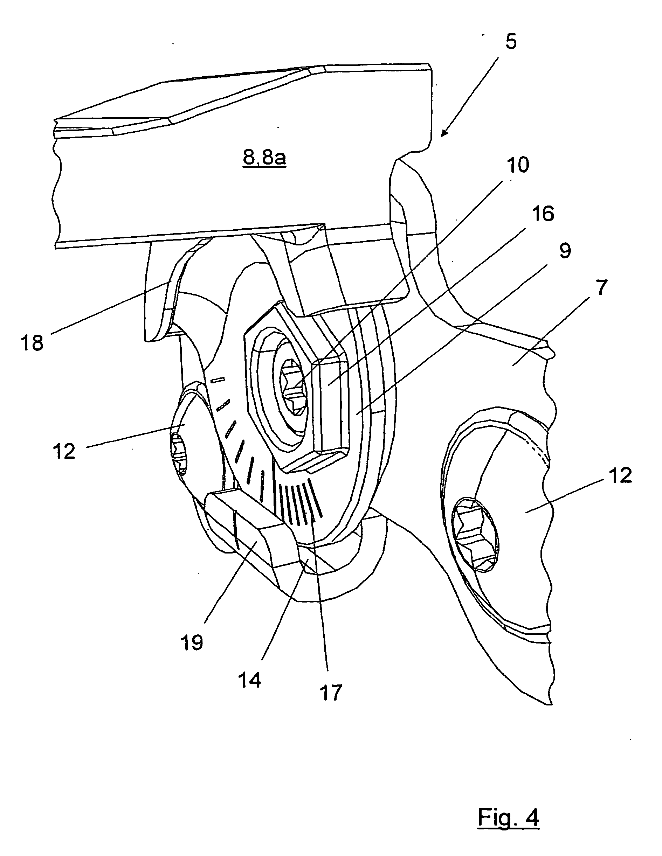

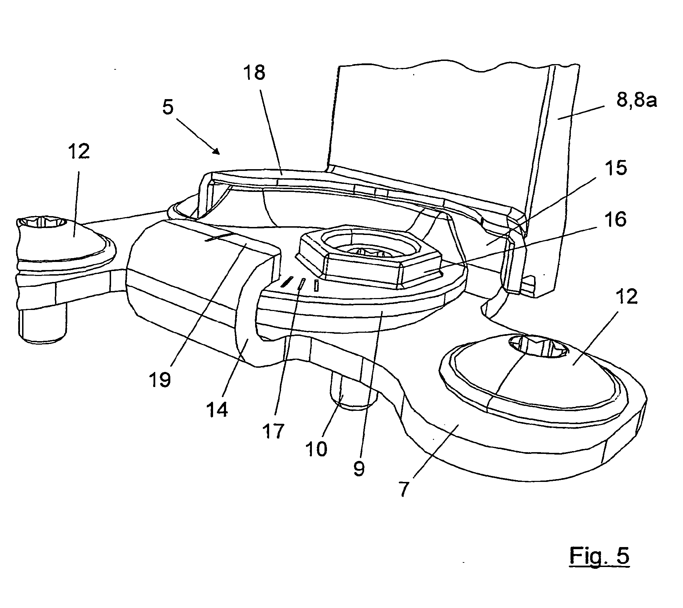

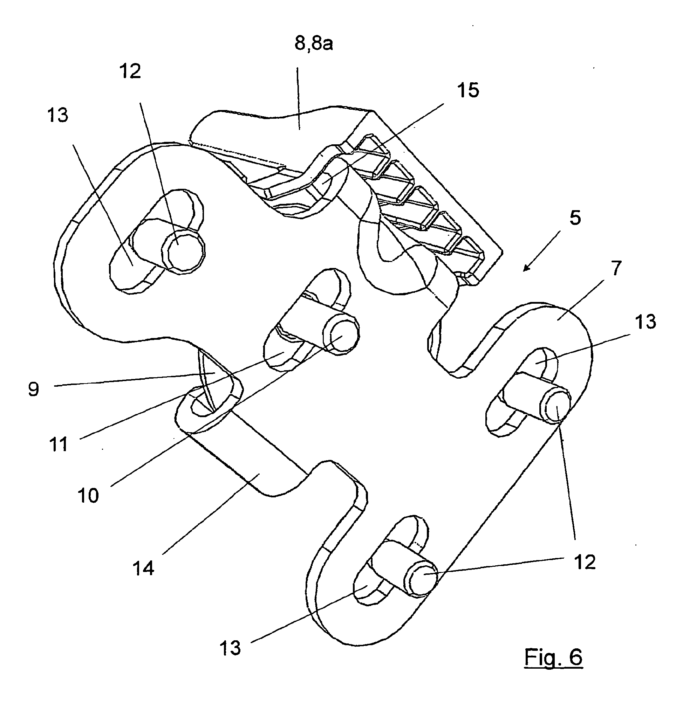

Die Figuren 2 bis 6 zeigen das an der Klappe 1 angebrachte Bauteil 5 in verschiedenen perspektivischen Ansichten. Dabei ist zu erkennen, dass an der Grundplatte 7 ein scheibenförmiger Exzenter 9 drehbar gelagert ist. Der beispielsweise als Kunststoffspritzgussteil ausgeführte Exzenter 9 ist mittels einer Schraube 10 mit der Klappe 1 verbunden. Wie aus Fig. 6 hervorgeht, ist die Schraube 10 in einem Langloch 11 in der Grundplatte 7 geführt. Durch die Schraube 10 kann zum Einen eine Bewegung des Exzenters 9 gegenüber der Grundplatte 7 verhindert werden, und es ist zum Anderen eine Befestigung der Grundplatte 7 gegenüber der Klappe 1 gegeben. Zur Befestigung der Grundplatte 7 an der Klappe 1 dienen außerdem drei weitere Schrauben 12, die ebenfalls in jeweiligen Langlöchern 13 in der Grundplatte 7 geführt sind, wie aus Fig. 6 hervorgeht.

Um die Grundplatte 7 auf sehr exakte Art und Weise gegenüber der Klappe 1 verstellen zu können, ist die Bewegung des Exzenters 9 durch zwei einander im Wesentlichen gegenüberliegende, an der Grundplatte 7 angebrachte Anschlagelemente 14 und 15 begrenzt. Dadurch wird erreicht, dass bei einem Verdrehen des Exzenters 9 sich derselbe an einem der beiden Anschlagelemente 14 oder 15 abstützt und auf diese Weise die Grundplatte 7 und damit das gesamte Bauteil 5 mit dem Einführelement 8 gegenüber der Klappe 1 verschiebt. Zum Verdrehen des Exzenters 9 gegenüber der Grundplatte 7 weist der Exzenter 9 im vorliegenden Fall einen Sechskant 16 auf, der gegenüber dem Mittelpunkt des Exzenters 9 verschoben ist. Gleiches gilt auch für die Anordnung der Schraube 10, die durch den Sechskant 16 verläuft.

Der Exzenter 9 weist in der dargestellten Ausführungsform eine Skala 17 auf, welche dem Monteur die relative Position des Exzenters 9 zu der Grundplatte 7 anzeigt und damit den Vorgang bei der Einstellung der Position des Bauteils 5 zu dem Bauteil 4 vereinfacht.

Um eine Vormontage des gesamten Bauteils 5 mit dem Exzenter 9 zu erleichtern, ist an der Grundplatte 7 ein über einen Teil des Exzenters 9 ragender Vorsprung 18 angebracht, der zum Halten des Exzenters 9 in seinem nicht montierten Zustand dient und somit, zusammen mit einem Vorsprung 19 des ersten Anschlagelements 14, eine Verliersicherung darstellt.

Der Montage- und Einstellvorgang des Bauteils 5 an der Klappe 1 verläuft wie folgt: Zunächst werden die Schrauben 12 in entsprechende, nicht dargestellte Gewinde der Klappe 1 eingeschraubt, jedoch nicht fest angezogen, so dass das Bauteil 5 durch die Schrauben 12 und die Schraube 10 an seiner Position gehalten wird. Anschließend wird die Schraube 10 so weit gelöst, dass es möglich ist, den Exzenter 9 gegenüber der Grundplatte 7 zu verdrehen. Diese Verdrehung des Exzenters 9 wird mit einem geeigneten Werkzeug durchgeführt, welches an dem Sechskant 16 des Exzenters 9 angreift, um das gesamte Bauteil 5 in y-Richtung zu verschieben. Hierbei kann der Monteur an der Skala 17 den Verstellweg in y-Richtung ablesen und somit die vorher ermittelte notwendige Verschiebung in y-Richtung definiert einstellen. Nach der korrekten Einstellung der Position des Bauteils 5 werden sowohl die Schraube 10 als auch die Schrauben 12 fest angezogen. Auf diese Weise ist lediglich ein Einstellvorgang erforderlich und es kann auf weitere Einstellvorgänge über Ausprobieren verzichtet werden.

Im dargestellten Ausführungsbeispiel ist das verstellbare Bauteil 5 an der Klappe 1 angebracht, es wäre prinzipiell jedoch auch möglich, das verstellbare Bauteil 5 an der Karosserie 3 und das starre Bauteil 4 an der Klappe 1 anzubringen.

## Patentansprüche

1. Vorrichtung zur Festlegung der Lage einer zwischen einer Offenstellung und einer Geschlossenstellung beweglichen Klappe (1) eines Kraftfahrzeugs in der Geschlossenstellung, insbesondere eines Verdeckkastendeckels, mit einem an einer Karosserie (3) des Kraftfahrzeugs angebrachten Bauteil (4) und mit einem an der Klappe (1) angebrachten Bauteil (5), welches beim Einnehmen der Geschlossenstellung von dem an der Karosserie angebrachten Bauteil (5) zumindest in einer Richtung geführt ist, wobei das an der Klappe (1) angebrachte Bauteil (5) oder das an der Karosserie angebrachte Bauteil (4) eine Grundplatte (7) zur Verbindung mit der Klappe oder der Karosserie und ein mit der Grundplatte (7) verbundenes Einführelement (8) aufweist,
**dadurch gekennzeichnet, dass**
die Grundplatte (7) mittels eines an derselben drehbar gelagerten Exzenters (9) gegenüber der Klappe (1) oder der Karosserie (3) verstellbar ist, wobei die Bewegung des Exzenters (9) durch zwei einander im wesentlichen gegenüberliegende, an der Grundplatte (7) angebrachte Anschlagelemente (14,15) begrenzt ist.

2. Vorrichtung nach Anspruch 1,
**dadurch gekennzeichnet, dass**
der Exzenter (9) mittels einer Schraube (10) mit der Klappe (1) oder der Karosserie (3) verbunden ist.

3. Vorrichtung nach Anspruch 2,
**dadurch gekennzeichnet, dass**
die Schraube (10) in einem Langloch (11) in der Grundplatte (7) geführt ist.

4. Vorrichtung nach Anspruch 1, 2 oder 3,
**dadurch gekennzeichnet, dass**
die Grundplatte (7) mittels mehrerer Schrauben (12) mit der Klappe (1) oder der Karosserie (3) verbunden ist.

5. Vorrichtung nach Anspruch 4,
**dadurch gekennzeichnet, dass**
die Schrauben (12) in jeweiligen Langlöchern (13) in der Grundplatte (7) geführt sind.

6. Vorrichtung nach einem der Ansprüche 1 bis 5,
**dadurch gekennzeichnet, dass**
der Exzenter (9) eine Skala (17) aufweist, welche die relative Position des Exzenters (9) zu der Grundplatte (7) anzeigt.

7. Vorrichtung nach einem der Ansprüche 1 bis 6,
**dadurch gekennzeichnet, dass**
der Exzenter (9) einen Sechskant (16) zum Verdrehen desselben gegenüber der Grundplatte (7) aufweist.

8. Vorrichtung nach den Ansprüchen 2 und 7,
**dadurch gekennzeichnet, dass**
die Schraube (10) innerhalb des Sechskants (16) angeordnet ist.

9. Vorrichtung nach einem der Ansprüche 1 bis 8,
**dadurch gekennzeichnet, dass**
an der Grundplatte (7) wenigstens ein zumindest über einen Teil des Exzenters (9) ragender Vorsprung (18,19) zum Halten des Exzenters (9) in seinem nicht montierten Zustand angebracht ist.

10. Vorrichtung nach einem der Ansprüche 1 bis 9,
**dadurch gekennzeichnet, dass**
das mit der Karosserie (3) verbundene Bauteil (4) und/oder das mit der Klappe (1) verbundene Bauteil (5) eine Schrägfläche (6) aufweist.

11. Vorrichtung nach einem der Ansprüche 1 bis 10,
**dadurch gekennzeichnet, dass**
die Grundplatte (7) an der Klappe (1) angebracht ist.

## Claims

1. Device for fixing the position of a lid (1) of a motor vehicle in the closed position, said lid being movable between an open position and a closed position, in particular the position of a convertible top compartment cover, comprising a component (4) attached to a body (3) of the motor vehicle, and comprising a component (5) which is attached to the lid (1) and which, when the component (5) attached to the body assumes the closed position, is guided at least in one direction, the component (5) attached to the lid (1) or the component (4) attached to the body having a base plate (7) for connection to the lid or the body and an insertion element (8) which is connected to the base plate (7), **characterised in that** the base plate (7) can be moved, by means of a cam (9) rotatably mounted on said plate, relative to the lid (1) or the body (3), the movement of the cam (9) being limited by two stop elements (14, 15) which are attached to the base plate (7) and which are substantially opposite one another.

2. Device according to claim 1, **characterised in that** the cam (9) is connected to the lid (1) or the body (3) by means of a screw (10).

3. Device according to claim 2, **characterised in that** the screw (10) is guided in a slot (11) in the base plate (7).

4. Device according to claim 1, 2, or 3, **characterised in that** the base plate (7) is connected to the lid (1) or the body (3) by means of a plurality of screws (12).

5. Device according to claim 4, **characterised in that** the screws (12) are guided in respective slots (13) in the base plate (7).

6. Device according to any of claims 1 to 5, **characterised in that** the cam (9) has a scale (17) which displays the position of the cam (9) relative to the base plate (7).

7. Device according to any of claims 1 to 6, **characterised in that** the cam (9) has a hexagon (16) for turning it relative to the base plate (7).

8. Device according to claims 2 and 7, **characterised in that** the screw (10) is located within the hexagon (16).

9. Device according to any of claims 1 to 8, **characterised in that** at least one projection (18, 19) which protrudes at least over part of the cam (9) is attached to the base plate (7) and is used to hold the cam (9) in its uninstalled state.

10. Device according to any of claims 1 to 9, **characterised in that** the component (4) connected to the body (3) and/or the component (5) connected to the lid (1) has a slanted surface (6).

11. Device according to any of claims 1 to 10, **characterised in that** the base plate (7) is attached to the lid (1).

## Revendications

1. Dispositif pour fixer dans une position fermée la position d'un capot (1), mobile entre une position ouverte et une position fermée, d'un véhicule automobile, notamment la position d'un couvercle de coffre de capote, avec une pièce (4) qui est agencée sur une carrosserie (3) du véhicule automobile et avec une pièce (5) qui est agencée sur le capot (1) et qui, lors de la mise en position fermée, est guidée au moins dans une direction par la pièce (4) agencée sur la carrosserie, la pièce (5) agencée sur le capot (1) ou la pièce (4) agencée sur la carrosserie comportant une plaque de base (7) pour l'assemblage au capot ou à la carrosserie et un élément d'insertion (8) assemblé à la plaque de base (7),
**caractérisé en ce que** la plaque de base (7) est ajustable par rapport au capot (1) ou à la carrosserie (3) au moyen d'un excentrique (9) de manière à pouvoir tourner sur ladite plaque de base, le mouvement de l'excentrique (9) étant limité par deux éléments de butée (14, 15) agencés sur la plaque de base (7) sensiblement en face l'un de l'autre.

2. Dispositif selon la revendication 1, **caractérisé en ce que** l'excentrique (9) est assemblé au moyen d'une vis (10) au capot (1) ou à la carrosserie (3).

3. Dispositif selon la revendication 2, **caractérisé en ce que** la vis (10) est guidée dans un trou oblong (11) dans la plaque de base (7).

4. Dispositif selon la revendication 1, 2 ou 3, **caractérisé en ce que** la plaque de base (7) est assemblée au moyen de plusieurs vis (12) au capot (1) ou à la carrosserie (3).

5. Dispositif selon la revendication 4, **caractérisé en ce que** les vis (12) sont guidées dans des trous oblongs respectifs (13) dans la plaque de base (7).

6. Dispositif selon l'une des revendications 1 à 5, **caractérisé en ce que** l'excentrique (9) comporte une graduation (17) qui indique la position relative de l'excentrique (9) par rapport à la plaque de base (7).

7. Dispositif selon l'une des revendications 1 à 6, **caractérisé en ce que** l'excentrique (9) comporte un écrou hexagonal (16) pour le faire tourner par rapport à la plaque de base (7).

8. Dispositif selon les revendications 2 et 7, **caractérisé en ce que** la vis (10) est agencée à l'intérieur de l'écrou hexagonal (16).

9. Dispositif selon l'une des revendications 1 à 8, **caractérisé en ce qu'**au moins une partie en saillie (18, 19) débordant au moins sur une partie de l'excentrique (9) est agencée sur la plaque de base (7) pour tenir l'excentrique (9) lorsqu'il n'est pas monté.

10. Dispositif selon l'une des revendications 1 à 9, **caractérisé en ce que** la pièce (4) assemblée à la carrosserie (3) et/ou la pièce (5) assemblée au capot (1) comportent une surface inclinée (6).

11. Dispositif selon l'une des revendications 1 à 10, **caractérisé en ce que** la plaque de base (7) est agencée sur le capot (1).
